# EUROPEAN PATENT SPECIFICATION

(11) **EP 2 185 968 B1**
(45) Date of publication and mention of the grant of the patent: **04.06.2014**
(21) Application number: 08776081.5
(22) Date of filing: 28.07.2008
(51) Int. Cl.: G02F 1/01

(54) **AN OPTICAL FILTER**
OPTISCHES FILTER
FILTRE OPTIQUE

(30) Priority: 27.07.2007 US 829574
(43) Date of publication of application: 19.05.2010
(73) Proprietor: Xtera Communications Ltd., Harold Wood Romford Essex RM3 0SD (GB)
(72) Inventor: WEBB, Stephen Michael, Kent DA13 0TP (GB); DESBRUSLAIS, Stephen, London SE9 2EB (GB); OBERLAND, Richard, London SE9 3HD (GB); ELLISON, John, Essex CO6 1XH (GB)
(74) Representative: Lawrence, John
(86) International application number: PCT/GB2008/002575
(87) International publication number: WO 2009/016360

(56) References cited:
- EP-A- 1 079 551
- US-A1- 2003 016 432
- US-A1- 2003 058 509
- JOHNSON M ET AL: "REMOTE STATE-OF-POLARIZATION CONTROL IN POLARIZATION-MAINTAINING FIBRE" OPTICS COMMUNICATIONS, NORTH-HOLLAND PUBLISHING CO. AMSTERDAM, NL, vol. 90, no. 1 / 02 / 03, 1 June 1992 (1992-06-01), pages 32-34, XP000274833 ISSN: 0030-4018
- MCGEEHAN J E ET AL: "Measuring Fiber and Component DGD Using Polarized Limited-Bandwidth Optical Sources and Monitoring the DOP" IEEE PHOTONICS TECHNOLOGY LETTERS, IEEE SERVICE CENTER, PISCATAWAY, NJ, US, vol. 16, no. 7, 1 July 2004 (2004-07-01), pages 1694-1696, XP011114354 ISSN: 1041-1135

## Description

### Field of the Invention

The present invention relates to the filtering of optical signals. More particularly, it relates to the filtering of optical signals in long-haul communications systems to achieve greater spectral efficiency.

### Background to the Invention

Wavelength division multiplexed (WDM) signals are commonly used in optical transmission systems. WDM signals combine a plurality of source signals (channels) at different frequencies in order to maximise the volume of data that may be simultaneously transmitted through a given optical fibre. However, as any data signal will have a finite bandwidth there is a limit to the number of channels within a given frequency range that may be satisfactorily transmitted, the limit occurring when adjacent channels begin to overlap spectrally. A spectral overlap causes transmission performance to degrade due to cross-talk between the adjacent signals. Moreover, the greater the width of the signal the greater the distorting effects of polarisation mode dispersion and chromatic dispersion during transmission. Additionally, a wider signal requires a wider filter at the receiver end to retrieve the data signal from the WDM signal and this introduces effects which reduce receiver optical signal-to-noise ratio (OSNR) performance.

A known approach to address the problems associated with the width of the data channels, such as cross-talk between adjacent channels, is through the use of the technique of Vestigial Sideband (VSB) filtering. This technique relies on the fact that in principle a conventional double sideband (DSB) data signal will be symmetric in wavelength around a central point (the area on each side of this point being known as a 'sideband'). As such, removing one or the other of the sidebands results in no loss of information (since each sideband is essentially a duplicate of the other) but will reduce the spectral width occupied by the transmitted signal. Furthermore, penalties due to transmission effects which partially destroy the symmetry of the sidebands are avoided. Such symmetry destroying effects become progressively worse as the bit rate, and hence the signal bandwidth, is increased

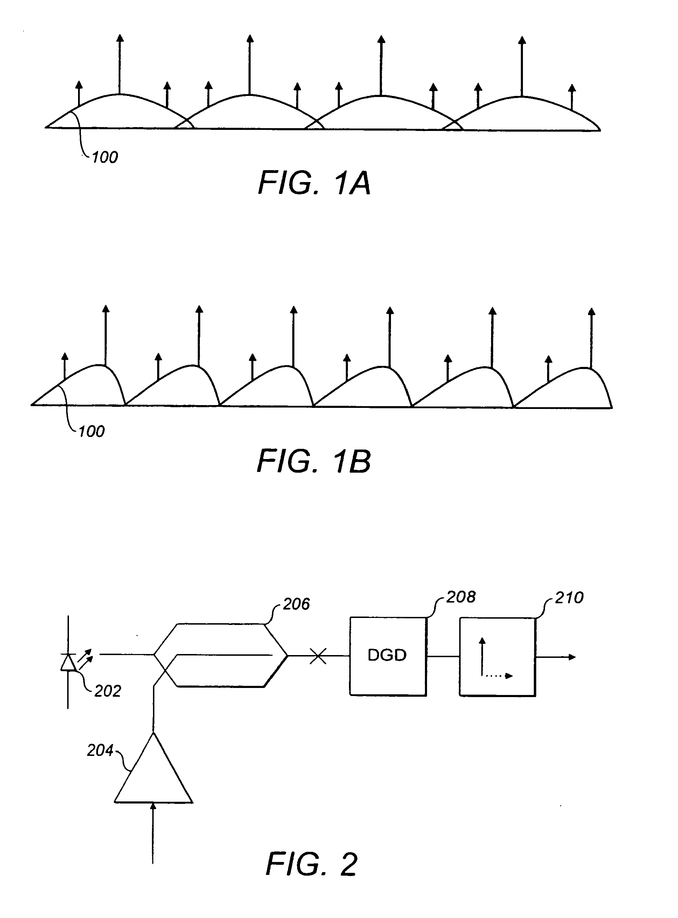

Figure 1 illustrates how VSB filtering may increase the number of channels possible within a given spectral range. Figure 1A shows the spectrum 100 for a number of unfiltered channels in a WDM signal, while VSB filtering has been applied to the channels of Figure 1B and as such a greater number of channels are possible within the limited bandwidth.

Conventionally, VSB filtering has been implemented by the use of a simple edge filter such as a Fibre Bragg Grating (FBG) in either reflection or preferably transmission. Such an arrangement is described in, for example, US patent 6,766,116. However, multi-pass filters of this type inherently introduce dispersion penalties around the edge of the filter. As a result, the quality of signals having wavelengths at the filter edge is reduced. Clearly, this is a particular problem in VSB filtering since the filter edge is approximately in the spectral centre of the channel. As a result, the degradation of the channels due to dispersion in the filter has often been found to negate or even exceed the advantages that may theoretically be gained from VSB filtering.

Another weakness of conventional VSB filtering techniques is that it is typically difficult to control the wavelength at which optical filters function once they have been manufactured. As such, WDM systems using VSB filtering are conventionally inflexible, and incapable of adapting to new circumstances in which the frequency of the channels is required to change (for instance a change in the number of channels may result in readjustment of the system to make the optimum use of the available bandwidth).

European Patent Application No. EP 1 079 551 discloses a method for filtering and a variable slope optical filter for in line use with an optical amplifier signal. The filter has a wavelength response that is substantially linear in slope within a band of operation wavelengths of the amplifier; the slope of the filter in an operating band of wavelengths is between zero and a only one of a positive or negative number, furthermore the filter has an amplitude response that has an opposite and counter slope as a function of wavelength to that of a gain tilt of the amplifier within the operation band of wavelengths. The filter having means of operating on polarized light such that different wavelengths within a band of wavelengths within the operation band are subject to different levels of attenuation according to their polarization state. A wave plate having a predetermined thickness provides a relative polarization difference between two wavelengths of an incoming beam in a controlled manner. A polarizer receives light from the wave plate and only allows a predetermined of light to pass therethrough unattenuated and variably attenuates or substantially prevents and/or attenuates other predetermined polarizations of light to pass therethrough.

US Patent Application Publication no. US2003/0016432 discloses a tunable optical filter having a variable wavelength characteristic of transmittance. The tunable optical filter includes first and second polarizers each having a transmission axis determining a polarization axis of transmitted polarized light, a birefrigent element having an optic axis determining a phase difference given between two orthogonal components of transmitted polarized light, and a Faraday rotator for giving a variable Faraday rotation angle to transmitted polarized light. The birefringent element and the Faraday rotator are provided between the first and second polarizers. The order of arrangement of the birefringent element and the Faraday rotator, and the relative positional relation between the optic axis of the birefringent element and the transmission axis of each polarizer are set so that the shape of a characteristic curve giving a wavelength characteristic of transmittance changes along a transmittance axis according to a change in the Faraday rotation angle.

### Summary of the Invention

According to a first aspect of the present invention, there is provided an optical filter comprising a differential group delay element for receiving a polarised source signal having a finite bandwidth at an input, the DGD element being effective to vary the polarisation of the signal across its bandwidth as a function of wavelength, and a polarisation filter coupled to an output of the DGD element, the polarisation filter being effective to attenuate the signal in dependence on wavelength; and a first variable waveplate disposed between the output of the DGD element and the polarisation filter, the first variable waveplate being effective to controllably alter the absolute polarization state of light passing therethrough.

The present invention spreads an initially polarised source signal across a range of polarisations, thereby creating a signal in which the polarisation state is a function of wavelength. A polarisation filter (commonly known as a polariser) is then provided to filter the signal according to wavelength.

The present invention allows wavelengths to be accurately filtered from a signal without the deleterious dispersive effects of conventional wavelength filters. Advantageously, the output of the polarisation filter is linearly polarised, allowing conventional polarisation-maintaining components and methods to be applied to filtered signal.

The initially polarised source is preferably linearly polarised. Alternatively, it may circularly or elliptically polarised. In a preferred embodiment, the present invention is arranged such that equal power of the initially polarised signal passes through both modes (i.e. along the fast and slow axes) of the DGD element. However, the distribution of the power between the modes may alternatively be adjusted in dependence on an observed signal quality of the signal leaving the device.

The present invention overcomes the problems associated with conventional wavelength filters (such as Fibre Bragg Gratings), such as dispersion at the filter edges. It does not rely on multi-pass gratings, mirrors, or other recursive techniques. Instead the signal is filtered by a polarising material, of which many are well known in the art.

Beneficially, the signal leaving the filter of the present invention is linearly polarised. As such, a wide range of known techniques that rely on the adjustment of an initially polarised signal may be applied to this output. These include polarisation multiplexing and further modulation stages.

In a preferred embodiment, the polarisation filter is adapted to substantially remove a sideband from the signal. The removal of a sideband finds particular utility in wavelength division multiplexed (WDM) optical communications systems. The removal of a sideband does not remove information from the signal, since each individual signal (or channel) in within an overall WDM signal is theoretically symmetric, but it does allow for a larger number of signals (channels) to be carried within a given frequency space. This type of filtering is known as vestigial sideband (VSB) filtering.

As stated above, the present invention finds particular utility in WDM systems. Such systems typically modulate a continuous wave (CW) polarised laser source with a data signal. Many different DSB data formats are known in the art, and find utility in the context of the present invention. These include, but are not limited to, return-to-zero (RZ), non-return-to-zero (NRZ), differential phase shift keyed (DPSK), differential quadrature phase shift keyed (DQPSK) and duobinary formats.

The first variable waveplate disposed between the output of the DGD element and the polarisation filter and being effective to controllably alter the absolute polarisation state of light passing therethrough effectively allows the angle between the polarisation state of a given wavelength within the signal and an optical axis of the polarisation filter to be controllably varied, thereby allowing the position of the response curve of the polarisation filter (where the output spectrum of the polarisation filter will be proportional to the input spectrum multiplied by the response curve) in frequency space to be adjusted as required. Additionally, the same effect may be achieved through control of the temperature of the DGD element, given one which has a suitable temperature coefficient difference between the two principle polarisation axes. Moreover, one skilled in the art would recognise that other techniques may be used to alter the differential delay applied by the DGD: for example, stress may be applied to the DGD element in order to tune its response.

In a preferred embodiment, the DGD element has an optical axis at 45 degrees to the polarisation state of the polarised source signal thereby splitting the power equally into both principle polarisation states through the DGD element This angle of polarisation offers the maximum depth or amplitude to the response curve of the polarisation filter. Alternatively, other angles between the optical axis and the polarisation state of the linearly polarised source signal may be chosen according to filtering requirements.

In some preferred embodiments of the present invention, a second variable waveplate is coupled to the input of the DGD element, the second variable waveplate being adapted to adjust the relative angle between the polarisation state of the linearly polarised source signal and an optical axis of the DGD element. In this way the depth of the filter response curve may be optimised while the filter is in use. This provides a number of advantages. For example, it allows actual on-line measurements of received signal quality to be used to optimise the second variable waveplate.

Preferably, the DGD element is a variable DGD element. This allows the period or spread of the filter response curve to be varied. As such, the filter cut-off may be steeper or shallower according to requirements, such as to adjust the specific bit rate or channel spacing of the system.

In preferred embodiments, one or more variables of the present invention are controlled by a feedback loop, the variables including: the angle between the polarisation state of the polarised source signal and an optical axis of the DGD element; the magnitude of DGD applied by the DGD element; and the angle between the polarisation state of a given frequency in the signal and an optical axis of the polarisation filter. In one particularly preferred embodiment, the first variable waveplate is controlled in dependence on optical power output by the polarisation filter. Preferably, the waveplate is controlled such that the ratio of optical output power to optical input power for the polarisation filter is 1:2. Alternatively or additionally, the waveplate may also be controlled in dependence on an indicator of signal quality produced by the optical filter measured at a receiver. The signal quality indicator is preferably bit error rate (BER) but may alternatively be other measures of signal quality including Q value and optical signal-to-noise ratio (OSNR).

According to a second aspect of the present invention, there is provided an optical device comprising a plurality of optical filters according to the first aspect, the optical filters being connected in series. The second aspect of the present invention provides a device capable of combining the filter response curves of each individual optical filter to produce any arbitrary response curve for the overall device. As such, the filter may produce complex response curves.

According to a third aspect of the present invention, there is provided a method for filtering a polarised optical source signal having a finite bandwidth, the method comprising: passing the source signal through a DGD element, thereby varying the polarisation of the signal across the bandwidth as a function of wavelength; and, passing the optical source signal through a polarisation filter, the polarisation filter being effective to attenuate the signal in dependence on wavelength; and passing the signal through a first variable waveplate after passing the signal through the DGD element and prior to passing the signal through the polarisation filter, the first variable waveplate being effective to controllably alter the absolute polarisation state of light passing therethrough.

### Brief Description of the Drawings

Examples of the present invention will be illustrated in detail with reference to the accompanying drawings, in which:
Figure 1A illustrates the frequency space taken up by unfiltered channels within a wavelength division multiplexed (WDM) signal;
Figure 1B illustrates the frequency space taken up by vestigial sideband (VSB) filtered channels within a WDM signal;
Figure 2 is a schematic diagram of an optical channel source incorporating an optical filter according to one embodiment of the present invention;
Figure 3A illustrates the effect of a DGD element on the polarisation state of an initially polarised signal comprising components having two distinct frequencies;
Figure 3B illustrates the response curve of an optical filter according to one embodiment of the present invention and the effect of such a filter on the spectrum of an optical channel;
Figure 4 is a schematic diagram of an optical filter incorporating variable waveplates according to the present invention;
Figure 5A illustrates the attenuation imparted to the spectrum of an optical channel by a polarisation filter and a wavelength filter;
Figure 5B illustrates the spectrum of an optical channel having passed through a polarisation filter and a wavelength filter;
Figure 5C illustrates the spectrum of the optical channel of Figure 5B prior to passing through the wavelength filter;
Figure 6 is a schematic diagram of an embodiment of the present invention incorporating an additional wavelength filter;
Figure 7A shows an embodiment of the present invention incorporating a feedback control loop;
Figure 7B shows a further embodiment of the present invention incorporating a feedback loop;
Figure 8 illustrates logarithmically and linearly the experimentally observed filter response curve of an optical filter according to the present invention;
Figure 9A illustrates the experimentally observed effect of an optical filter according to an embodiment of the present invention on the linear spectrum of an optical channel;
Figure 9B illustrates the experimentally observed effect of an optical filter according to an embodiment of the present invention on the logarithmic spectrum of an optical channel;
Figure 10 compares the optical signal-to-noise ratio (OSNR) against bit error rate (BER) performance for an unfiltered channel, a VSB filtered channel according to the present invention, and a VSB filtered channel according to prior art techniques;
Figure 11 shows the OSNR required to achieve a given BER of the a VSB filtered channel and an unfiltered channel for a range of dispersion values; and,
Figure 12 shows a concatenated array of optical filters in accordance with an aspect of the present invention.

### Detailed Description

Figure 2 shows a simple example of VSB filtering using the present invention. A continuous wave (CW) laser source 202 provides an initial linearly polarised optical signal. The optical signal is then modulated by a Mach-Zender (MZ) interferometer 206 driven by a return-to-zero (RZ) electrical data source passing through a drive amplifier 204, thereby creating an optical data channel. Although Figure 2 shows a preferred method for production of the data channel, many alternative methods of producing an optical data channel (whether RZ or otherwise) are well known in the art and applicable in the context of the present invention.

The data channel then passes through a differential group delay (DGD) 208 element having an optical axis at 45 degrees to the polarisation state of the data channel. This 45 degrees connection may be achieved by an external rotated splice 212 or preferably by suitable pigtail alignment on the DGD element input. The DGD element 208 varies the polarisation state of the data channel linearly with frequency. The greater the DGD introduced to the channel the larger the spread of polarisation across the channel's bandwidth.

The data channel then passes through a polarisation filter (polariser) 210. Since the polarisation across the spectrum of the data channel varies with wavelength, the polarisation filter 210 effectively acts to filter certain wavelengths within the channel from the signal. By judicious alignment of the optical axis of the polarisation filter 210 this effect may be employed to create a VSB filtered signal.

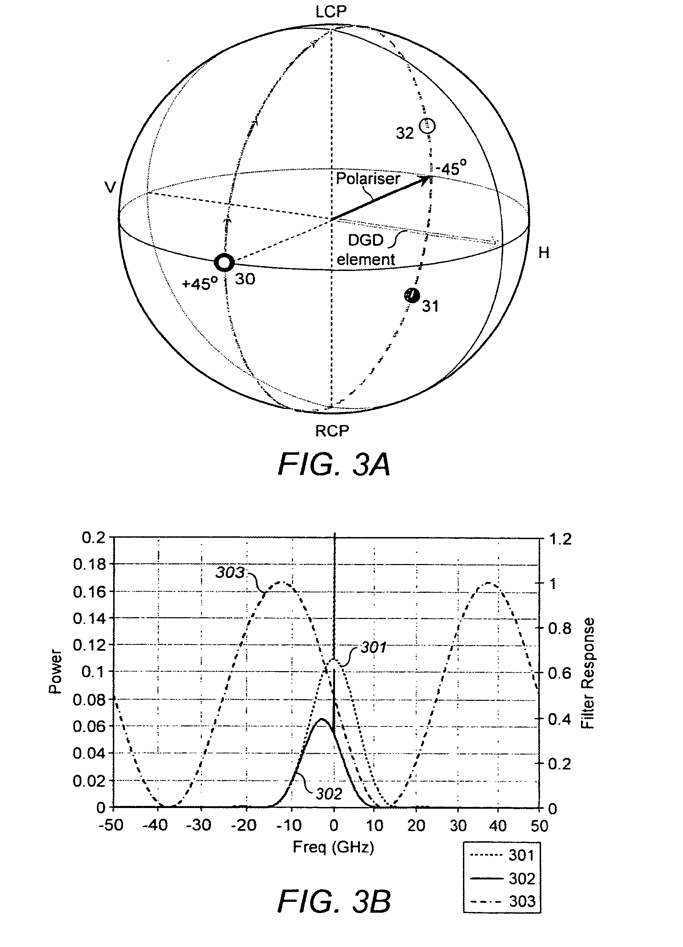

Figure 3A illustrates on the Poincaré sphere the effect of the DGD element on an initially polarised signal. Consider two frequencies f1 and f2 within the initial signal. These will have the same initial polarisation state 30. The polarisation of the DGD element is, in this example, at 45 degrees to that of the initial polarisation state 30. Once the signal has passed through the DGD element the frequencies f1 and f2 have separate first and second final polarisation states 31 and 32.

Although Figure 3A shows the initial signal as linearly polarised, one skilled in the art would recognise that the initial signal may alternatively be elliptically or linearly polarised. The signal that leaves the DGD element will be spread in polarisation as long as the power of the initial signal is split to some degree between the fast and slow modes of the DGD element. The maximum extinction ratio is achieved when the power is equally split between these two modes (as is the case when the optical axis of the DGD element is at 45 degrees to the state of polarisation of an initially linearly polarised signal) and, as such (and as described below) the variation of the angle of the polarisation axis of the DGD element can be used to adjust the extinction ratio (or 'depth') of the resulting signal.

Figure 3B illustrates an exemplary response curve 303 of the polarisation filter 210 of the present invention with wavelength, along with the effect of the filter on an arbitrary channel (shown both unfiltered 302 and filtered 301). As can be seen, the polarisation filter exhibits a raised-cosine response curve 303. The depth of this curve 303 is a function of the angle between the optical axis of the DGD element 208 and the polarisation state of the initial, linearly polarised, channel. The maximum depth is achieved at the 45 degree angle adopted in the embodiment shown in Figure 2. The 'period' of the curve 303 (its wavelength in wavelength space or repetition bandwidth) is the function of the magnitude of the DGD applied by the DGD element 208 (which, in turn, is often a function of the length of the DGD element 208). A greater DGD will increase the spread of polarisation in a given wavelength range and therefore reduce the distance between peaks of the filter response curve 303. Finally, the absolute position of the filter response curve 303 in frequency space may be altered by changing the relative angle between the optical axis of the polarisation filter and the polarisation states of the signal entering the polarisation filter (effectively this is achieved by trimming the delay of the waveplate).

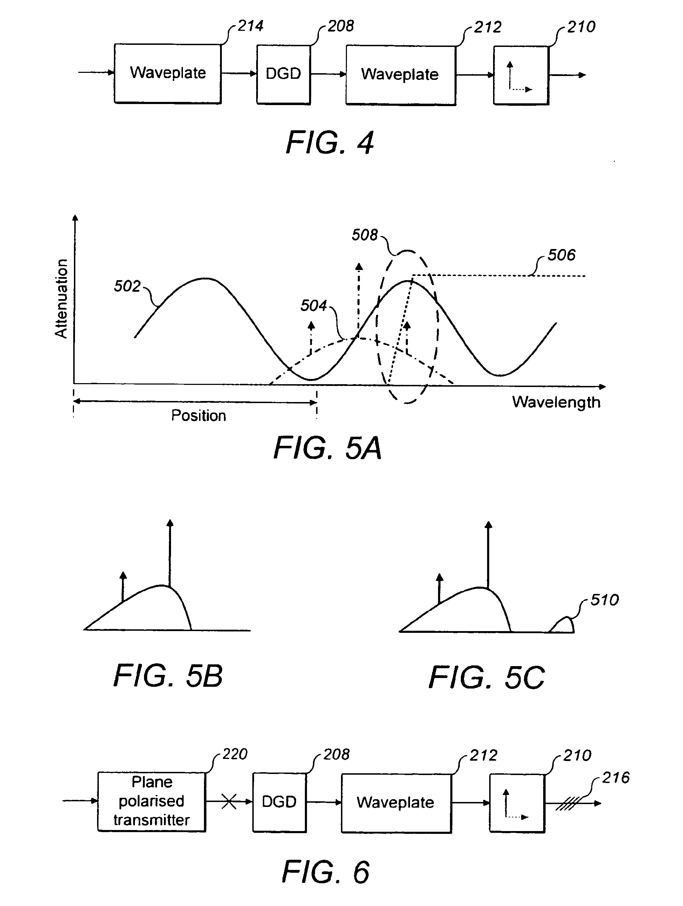

A waveplate is a device that may be used to alter the absolute polarisation state of an optical signal. As shown in Figure 4, a waveplate 214 may be placed before the DGD element 208 in order to vary the depth of the filter response, while a second waveplate 212 may be placed before the polarisation filter in order to vary the position of the filter response. As mentioned previously, altering the magnitude of the DGD alters the period of the filter response (one skilled in the art would also recognise that any finite change of DGD value will affect the position of the filter response). In this way an apparatus can be achieved that allows optimisation of all variables of the raised cosine curve.

Other techniques may be used to alter the polarisation state of the signal. In one example, the absolute refractive indices of the DGD element are dependent on temperature. As such, altering the temperature of the DGD element may be effective to vary the position of the filter response. This temperature control may be used as an alternative or as an addition to the second waveplate 212 described above.

In a VSB filtering application it is theoretically desired to remove one sideband of the channel (that is, to filter out the entire signal either above or below the central wavelength but not affect the other sideband). However, no filter has an exact cut-off point at a given frequency (a discontinuity in the response curve) and so this is never possible in practice. It is nevertheless desirable for the response curve to be as steep as practically possible at the central wavelength. Given that the response curve of the polarisation filter is a raised cosine this would suggest increasing the depth and reducing the period.

However, if the period of the response curve is reduced excessively then the far edge of the sideband may no longer be dampened by the filter. In some embodiments, it is therefore considered preferable to introduce an additional optical filter to remove this remnant. Figure 5A illustrates this case, showing the spectrum 504 of the optical signal, the attenuation 502 caused by the polarisation filter, the attenuation 506 caused by the additional optical filter, and the region 508 in which the additional optical filter causes dispersive effects. Figure 5C shows the effect of the polarisation filter alone on the spectrum of the optical channel (clearly showing the remnant 510 of the sideband), while Figure 5B shows the same spectrum after the channel has passed through the additional optical filter. Figure 6 shows the additional filter 216 incorporated into an embodiment of the present invention receiving a channel from a plane polarised transmitter 220. This additional filter 216 may be a conventional wavelength filter such as a Fibre Bragg Grating (as illustrated in Figure 6). The dispersive effects of such filters are only apparent around the cut-off frequency that marks the transition between frequencies that may pass through the filter and those that may not. Since the remnant lies far from the central carrier signal a conventional filter may be used without incurring the dispersive effects in the VSB filtered channel that are present in prior art systems. Typically, the additional (conventional) filter will have a similar characteristic response to the channel multiplexing filter that is commonly used at the transmitter to multiplex a number of wavelengths with minimal insertion loss, thus no additional filter or cost is required over a conventional configuration. Typical examples are multi-layer dielectric or interleaving filters.

It is envisaged that the parameters of the filtering process of the present invention (such as the depth, period and position of the filter response) may be controlled by one or more feedback loops. These feedback loops may measure properties of the channel produced by the present invention and act to optimise these. These properties may be observed at any point along the transmission line, including at the transmitter and the receiver. Suitable properties measure the quality of the signal and may include: the power of the signal leaving the polarisation filter; the bit error rate (BER) measured at the transmitter or the receiver; or other parameters such as Q or signal-to-noise ratio (SNR). Measurement of these properties may be used to control one or more of the amount of DGD applied to the signal, the relative angle between the optical axis of the DGD element 208 and the polarisation state of the initial signal, and the angle of the optical axis of the polarisation filter relative to the signal entering it.

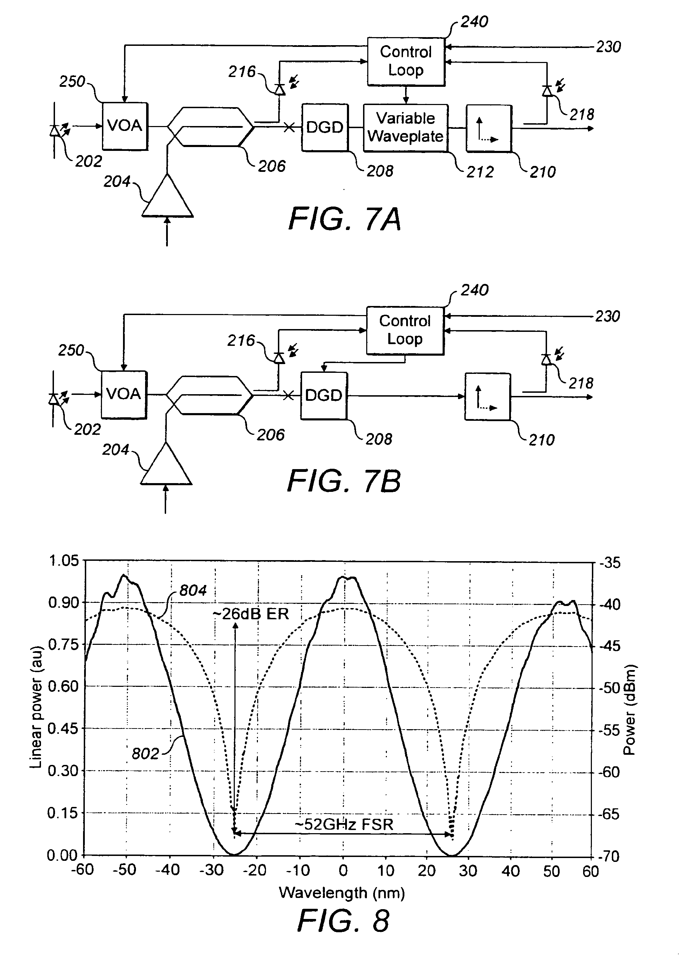

Figure 7A illustrates a preferred embodiment of the present invention adopting an envisaged feedback scheme. A CW source 202 is modulated by a MZ modulator 206 driven by an RZ source passing through a driver amplifier 204, thereby forming a polarised data channel. Other techniques well known in the art may alternatively be used to create the polarised data channel. The data channel subsequently passes through a DGD element 208 in order to spread the polarisation of the data channel. The data channel then passes through a variable waveplate 212 and a polarisation filter 210, thereby creating a filtered channel. The waveplate 212 may be controlled to adjust the angle between the polarisation state of the data channel and the optical axis of the polarisation filter 210, and (as described above) this moves the position of the filter response curve in frequency space.

In order to optimise the position of the filter response, light sensors 216, 218 are provided to measure the optical power entering the DGD element (Pᵢₙ) and the optical power leaving the polarisation filter (Pₒᵤₜ). Furthermore, the BER 230 is measured at a receiver at the far end of the transmission line. A control loop 240 first varies the waveplate 212 to adjust the ratio Pᵢₙ:Pₒᵤₜ to a desired value (for example, a 2:1 ratio may be considered desirable in a system that intends to remove half the initial signal). The control loop 240 then adjusts the waveplate 212 to minimise the measured BER 230 at the far-end receiver. This technique has the advantage of approximating the ideal value (by achieving the desired Pᵢₙ:Pₒᵤₜ ratio) in a relatively short period of time and subsequently reaching ideal conditions through the measurement of BER at the receiver end. Although the waveplate 212 could be controlled, for example, on the basis of the BER alone (ignoring the Pᵢₙ:Pₒᵤₜ ratio), this would result in a slow response time since BER measurement to a reasonable statistical accuracy may take some time, particularly when the BER is low.

In practice, WDM systems require that each channel has a constant output power. Since variation of the filter response (by control of the wavelength) alters the output power, the device of Figure 7A further includes a variable optical attenuator (VOA) 250 which is also controlled by the control loop 240. The VOA 250 is used to ensure that the overall output power remains at a target value (regardless of the ratio of Pᵢₙ:Pₒᵤₜ).

Figure 7B shows another preferred embodiment of the present invention. Instead of using the variable waveplate 212 of Figure 7A to control the angle between the polarisation state of the data channel and the optical axis of the polarisation filter 210, the control loop 240 of the embodiment of Figure 7B adjusts the temperature of the DGD element 208 for this purpose.

Various devices and structures may be used to implement the features of the present invention. For example, the DGD element 208 may simply be a length of polarisation maintaining (PM) fibre. Such fibres have different refractive indices in different directions and as a consequence light polarised in one direction is delayed relative to that polarised in another, thereby introducing a DGD. Alternatively, specific components have been developed to introduce DGD to optical signals. Examples of such components include the PolaDelay device produced by General Photonics (www.generalphotonics.com/FixDGD.htm). Components of this type typically offer superior thermal and mechanical stability to PM fibres and are also relatively simple to align with the polarisation of the initial optical signal.

Tuneable DGD elements are also available, allowing the period of the filter response curve to be varied. An example of such a component is the DynaDelay produced by General Photonics (www.generalphotonics.com/DynaDelay.htm).

A wide variety of polarisation filters (polarisers) are available and the implementation of this function may vary from design to design. As described above, in order to control the position of the filter response curve in frequency space it is advantageous to include a device (such as a waveplate) to adjust the polarisation of the channel leaving the DGD element 208. An integrated component manufactured by Phoenix Photonics provides a variable waveplate and a polarisation filter in a single device. The relative angle of the polarisation filter may be adjusted by applying a heating current to the waveplate.

Figure 8 shows an experimentally measured response curve of a polarisation filter in the context of the present invention. A polarised noise source was applied to a 20ps DGD element and the resultant signal was passed through the polarisation filter. The filter characteristic (or response curve) is represented on both logarithmic 804 and absolute 802 scales. The extinction ratio was measured as 26dB, while the distance between adjacent minima (or free spectral range (FSR)) was discovered to be 52GHz. This is in close agreement with the theoretical prediction for the FSR of 1/DGD or 50GHz.

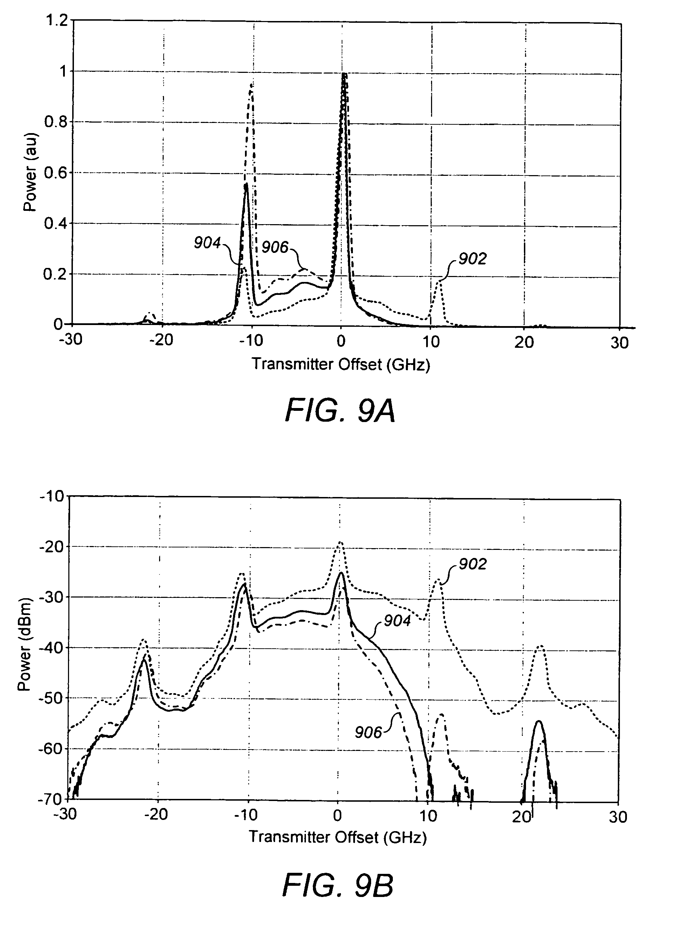

Figure 9 shows the observed effect of the polarisation filter on the spectrum of a signal on both absolute (Figure 9A) and logarithmic (Figure 9B) scales. The curve 902 represents an unfiltered signal (without the polarisation filter) while curves 904 and 906 and show the effect of the polarisation filter at different angles to the polarised input signal (recall that the position of the filter response curve depends on the angle of the optical axis of the polarisation filter). Figure 9 clearly shows that the polarisation filter is effective to remove the sideband of the input signal.

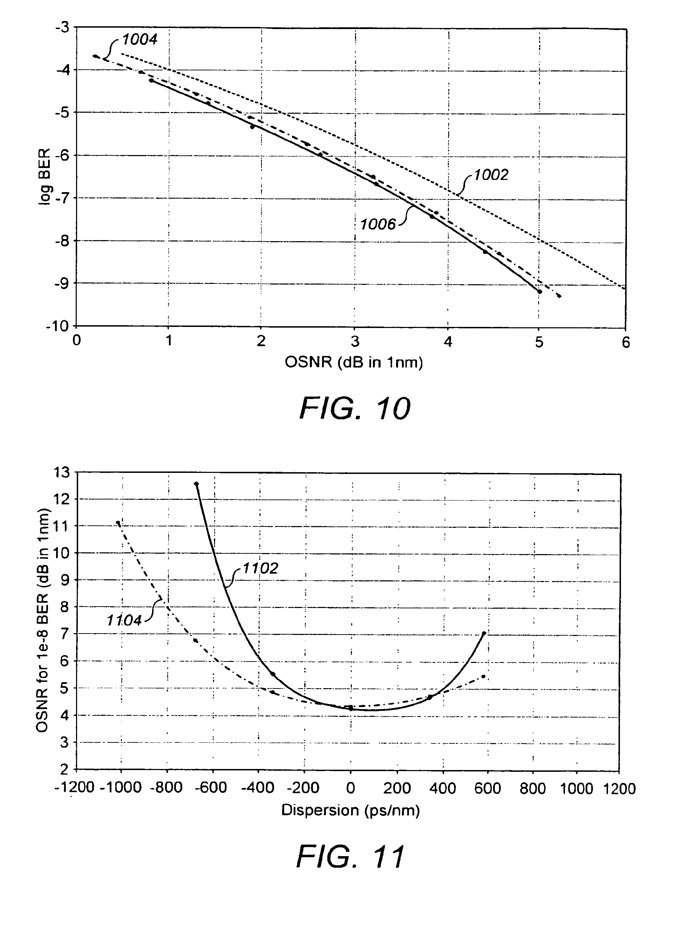

Figure 10 shows the input optical signal-to-noise ratio (OSNR) against the bit error rate (BER) for three types of data channel: unfiltered 1006; VSB filtered according to the present invention 1004; and VSB filtered using conventional prior art wavelength filtering techniques 1002. As shown, prior art VSB techniques require a significantly higher OSNR to achieve the same BER as an unfiltered signal. This is due to the dispersive effects of multi-pass filters mentioned above. In contrast, the performance penalty of VSB filtering according to the present invention is negligible.

In addition to allowing a greater number of WDM channels to be carried in a given spectral bandwidth without incurring penalties associated with cross-talk and other disadvantageous effects, VSB filtering according to the present invention also reduces the effect of optical dispersion during transmission of a channel from transmitter to receiver. Moreover, the present invention allows the use of electrical dispersion compensation to mitigate the dispersive effects that remain.

The transmission dispersion advantages of the present invention arise both from the narrower bandwidth of a VSB filtered signal and from the fact that (predominantly) only one sideband and the central carrier frequency remain. Any particular component of the sideband will typically be advanced or retarded from the carrier frequency according to the difference in frequency between the component and the carrier. The electrical signal constructed by a receiver on receipt of a VSB filtered signal will contain this dispersion distortion and may be corrected by applying an opposite dispersion characteristic in the electrical domain. It is not possible to correct for dispersion in this way when both sidebands are present since conventional receiver techniques result in the upper and lower sidebands being superimposed in the electrical signal. Since these two sidebands are affected differently by the dispersion it is impossible to apply the opposite dispersion characteristic to reverse the dispersion effects on the signal.

One skilled in the art would recognise a number of techniques that may be applied in the electrical domain to correct dispersion in the signal. For example, an electrical transmission line could be fabricated to offer a particular inverse delay versus electrical frequency.

In a preferred embodiment, electrical dispersion compensation in the received signal is achieved through the use of a transversal filter (alternatively known, particularly in the digital signal processing (DSP) domain, as a finite impulse response (FIR) filter). Essentially, a filter of this type adds delayed portions of the initial signal back into the initial signal to create any arbitrary filter response. In one example, an initial electrical signal passes through a series of discrete delay elements. A fraction of the signal is extracted (or "tapped") after each delay and passed through an adjustable gain stage. Once each extracted section of the signal has been amplified appropriately they are recombined by a summing element that takes the resulting signals and adds them together. By adjusting the variables of the system (such as the delay, the fraction of the signal extracted after each delay, and the amount of gain applied to each extracted signal) appropriately, the technique may generate any arbitrary filter response. Transversal filters have been studied academically. Details of these studies may be found at, for example, (http://www.eecg.utoronto.ca/-sorinv/papers/altan_csics_04.pdf).

Although the above description is predominantly concerned with VSB filtering, the present invention may be used to filter a signal for other purposes. This can be done by varying the depth, period and position of the filter response curve according to requirements.

The filter provided by the present invention has a periodic response characteristic. As such, a single filter may be used to provide VSB filtering for a plurality of data channels in a WDM signal. In such circumstances, the filter would be applied to the WDM signal as a whole, rather than to the individual data channels before they have been multiplexed. Moreover, it is envisaged that a feedback loop may be used to control the wavelength and other characteristics of the data channel source, rather than those of the filter itself, in such an arrangement.

Figure 11 shows the OSNR required to obtain a BER of 1 e-9 for a given dispersion for a VSB filtered signal 1104 and for an unfiltered signal 1102. It clearly shows that VSB filtering the signal reduces the OSNR required to overcome significant dispersion.

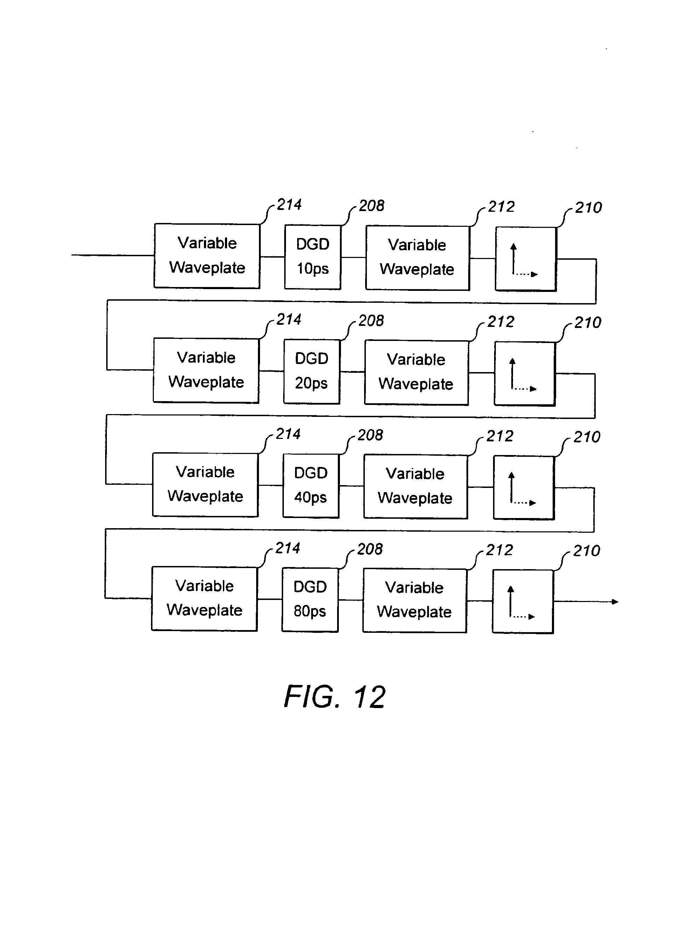

Moreover, it is also envisaged that a concatenated array of DGD elements 208 and polarisation filters may be used to produce complex filter response curves according to requirements. Figure 12 shows an example of such an array, having waveplates 212, 214 before each DGD element 208 and each polarisation filter 210 in order to adjust the relative polarisation angles and thus the depth and position of the response curve of each individual filter 210. Each DGD element 208 has a different value (resulting in a different period for each response curve) such that in combination the overall filter response of the concatenated array acts as a Fourier combination of a plurality of sinusoidal waves having different wavelengths. In the particular example shown, the values of the DGD elements 208 are 10ps, 20ps, 40ps and 80ps respectively.

The array of Figure 12 is therefore able to vary the depth and position of a number of individual filters having different periods. As a result, it is possible to synthesise an arbitrary filter response from the combined array. In this way, a filter having any required properties may be produced. Moreover, as in other embodiments of the present invention, the filter introduces negligible dispersion penalties into the system (unlike conventional wavelength filters).

Though the above description refers to RZ data channels, any known modulation format may be used in accordance with the present invention. In particular, the invention has been found to be effective with RZ-Differential Phase Shift Keyed (RZ-DPSK) formats. It may also be used in chirped RZ (CRZ) and RZ-Differential Quadrature Phase Shift Keyed (RZ-DQPSK) applications. Other formats in which the invention finds efficacy include non-return-to-zero (NRZ), duobinary, or M-ary (such as phase and amplitude modulated 16-ary Quadrature Amplitude Modulation (16-QAM)), formats.

## Claims

1. An optical filter comprising: a differential group delay element DGD (208) for receiving a polarised source signal having a finite bandwidth at an input, the DGD element being effective to vary the polarisation of the signal across its bandwidth as a function of wavelength; a polarisation filter (210) coupled to an output of the DGD element, the polarisation filter being effective to attenuate the signal in dependence on wavelength; and a first variable waveplate (212) disposed between the output of the DGD element and the polarisation filter, the first variable waveplate being effective to controllably alter the absolute polarisation state of light passing therethrough.

2. An optical filter according to claim 1, wherein the polarisation filter (210) is arranged to substantially remove one sideband of the signal.

3. An optical filter according to claim 1 or 2, wherein the polarised source signal is linearly polarised.

4. An optical filter according to any preceding claim, wherein the DGD element (208) has an optical axis at 45 degrees to the polarisation state of the polarised source signal.

5. An optical filter according to any preceding claim, wherein the DGD element (208) is temperature sensitive such that alteration of the temperature of the DGD element is effective to adjust the absolute polarisation state of light passing therethrough.

6. An optical filter according to any preceding claim, further comprising a second variable waveplate (214) coupled to the input of the DGD element, the second variable waveplate being adapted to adjust the relative angle between the polarisation state of the linearly polarised source signal and an optical axis of the DGD element.

7. An optical device, comprising a plurality of optical filters according to any preceding claim connected in series.

8. A method for filtering a polarised optical source signal having a finite bandwidth, the method comprising: passing the source signal through a differential group delay DGD element (208), thereby varying the polarisation of the signal across the bandwidth as a function of wavelength; passing the optical signal through a polarisation filter (210), the polarisation filter being effective to attenuate the signal in dependence on wavelength; and passing the signal through a first variable waveplate (212) after passing the signal through the DGD element and prior to passing the signal through the polarisation filter, the first variable waveplate being effective to controllably alter the absolute polarisation state of light passing therethrough.

9. A method according to claim 8, wherein the polarisation filter (210) is arranged to substantially remove one sideband of the signal.

10. A method according to claim 8 or 9, wherein the polarised optical source signal is linearly polarised.

11. A method according to any of claims 8 to 10, wherein the DGD element (208) has an optical axis at 45 degrees to the polarisation state of the polarised source signal.

12. A method according to any of claims 8 to 11, further comprising the step of controlling the temperature of the DGD element (208), wherein alteration of the temperature of the DGD element is effective to adjust the absolute polarisation state of light passing therethrough.

13. A method according to any of claims 8 to 12, further comprising the step of passing the optical source signal through a second variable waveplate (214) prior to passing the signal through the DGD element, the second variable waveplate being adapted to adjust the relative angle between the polarisation state of the linearly polarised source signal and an optical axis of the DGD element.

## Patentansprüche

1. Optischer Filter, aufweisend: ein Gruppenlaufzeitdifferenzelement DGD (208) zum Empfangen eines polarisierten Quellsignals mit einer begrenzten Bandbreite an einem Eingang, wobei das DGD-Element dazu dient, die Polarisation des Signals über dessen Bandbreite als Funktion der Wellenlänge zu variieren; ein Polarisationsfilter (210), das mit einem Ausgang des DGD-Elements verbunden ist, wobei das Polarisationsfilter dazu dient, das Signal in Abhängigkeit von der Wellenlänge zu dämpfen; und eine erste variable Wellenplatte (212), die zwischen dem Ausgang des DGD-Elements und dem Polarisationsfilter angeordnet ist, wobei die erste variable Wellenplatte dazu dient, den absoluten Polarisationszustand von hindurchtretendem Lichtes regelnd zu ändern.

2. Optisches Filter nach Anspruch 1, wobei das Polarisationsfilter (210) so angeordnet ist, dass es im Wesentlichen nur ein Seitenband des Signals entfernt.

3. Optisches Filter nach Anspruch 1 oder 2, wobei das polarisierte Quellsignal linear polarisiert ist.

4. Optisches Filter nach einem der vorangehenden Ansprüche, wobei das DGD-Element (208) eine optische Achse bei 45 Grad zum Polarisationszustand des polarisierten Quellsignals aufweist.

5. Optisches Filter nach einem der vorangehenden Ansprüche, wobei das DGD-Element (208) temperaturempfindlich ist, so dass eine Änderung der Temperatur des DGD-Elements dazu dient, den absoluten Polarisationszustand von hindurchtretendem Licht anzupassen.

6. Optisches Filter nach einem der vorangehenden Ansprüche, ferner eine zweite variable Wellenplatte (214) aufweisend, die mit dem Eingang des DGD-Elements verbunden ist, wobei die zweite variable Wellenplatte dafür ausgelegt ist, den relativen Winkel zwischen dem Polarisationszustand des linear polarisierten Quellsignals und einer optischen Achse des DGD-Elements anzupassen.

7. Optische Vorrichtung, eine Mehrzahl von optischen Filtern nach einem der vorangehenden Ansprüche aufweisend, die in Reihe verbunden sind.

8. Verfahren zum Filtern eines polarisierten optischen Quellsignals mit einer begrenzten Bandbreite, wobei das Verfahren umfasst: Leiten des Quellsignals durch ein Gruppenlaufzeitdifferenz-, DGD-Element (208), wodurch die Polarisation des Signals über der Bandbreite als Funktion der Wellenlänge variiert wird; Leiten des optischen Signals durch ein Polarisationsfilter (210), wobei das Polarisationsfilter dazu dient, das Signal abhängig von der Wellenlänge zu dämpfen; und Leiten des Signals durch eine erste variable Wellenplatte (212) nach dem Leiten des Signals durch das DGD-Element und vor dem Leiten des Signals durch das Polarisationsfilter, wobei die erste variable Wellenplatte dazu dient, den absoluten Polarisationszustand des hindurchtretenden Lichtes regelnd zu ändern.

9. Verfahren nach Anspruch 8, wobei das Polarisationsfilter (210) so angeordnet ist, dass es im Wesentlichen nur ein Seitenband des Signals entfernt.

10. Verfahren nach Anspruch 8 oder 9, wobei das polarisierte Quellsignal linear polarisiert ist.

11. Verfahren nach einem der Ansprüche 8 bis 10, wobei das DGD-Element (208) eine optische Achse bei 45 Grad zum Polarisationszustand des polarisierten Quellsignals aufweist.

12. Verfahren nach einem der Ansprüche 8 bis 11, ferner den Schritt des Regelns der Temperatur des DGD-Elements (208) umfassend, wobei die Änderung der Temperatur des DGD-Elements dazu dient, den absoluten Polarisationszustand von hindurchtretendem Licht anzupassen.

13. Verfahren nach einem der Ansprüche 8 bis 12, ferner den Schritt des Leitens des optischen Quellsignals durch eine zweite variable Wellenplatte (214) vor dem Leiten des Signals durch das DGD-Element umfassend, wobei die zweite variable Wellenplatte dafür ausgelegt ist, den relativen Winkel zwischen dem Polarisationszustand des linear polarisierten Quellsignals und einer optischen Achse des DGD-Elements anzupassen.

## Revendications

1. Filtre optique comprenant : un élément de retard de groupe différentiel DGD (208) pour recevoir un signal de source polarisé ayant une largeur de bande finie à une entrée, l'élément DGD étant efficace pour faire varier la polarisation du signal à travers sa largeur de bande en fonction de la longueur d'onde ; un filtre de polarisation (210) couplé à une sortie de l'élément DGD, le filtre de polarisation étant efficace pour atténuer le signal en fonction de la longueur d'onde ; et une première lame à retard variable (212) disposée entre la sortie de l'élément DGD et le filtre de polarisation, la première lame à retard variable étant efficace pour modifier de manière contrôlée l'état de polarisation absolue de lumière qui le traverse.

2. Filtre optique selon la revendication 1, dans lequel le filtre de polarisation (210) est agencé pour éliminer sensiblement une bande latérale du signal.

3. Filtre optique selon la revendication 1 ou 2, dans lequel le signal de source polarisé est polarisé linéairement.

4. Filtre optique selon l'une quelconque des revendications précédentes, dans lequel l'élément DGD (208) a un axe optique à 45 degrés par rapport à l'état de polarisation du signal de source polarisé.

5. Filtre optique selon l'une quelconque des revendications précédentes, dans lequel l'élément DGD (208) est sensible à la température, tel que la modification de la température de l'élément DGD est efficace pour régler l'état de polarisation absolue de lumière qui le traverse.

6. Filtre optique selon l'une quelconque des revendications précédentes, comprenant en outre une deuxième lame d'onde variable (214) couplée à l'entrée de l'élément DGD, la deuxième lame à retard variable étant adaptée pour ajuster l'angle relatif entre l'état de polarisation du signal de source à polarisation linéaire et un axe optique de l'élément DGD.

7. Dispositif optique, comprenant une pluralité de filtres optiques selon l'une quelconque des revendications précédentes, connectés en série.

8. Procédé de filtrage d'un signal de source optique polarisé ayant une largeur de bande finie, le procédé comprenant : le passage du signal de la source à travers un élément de retard de groupe différentiel DGD (208), ce qui fait varier la polarisation du signal à travers la largeur de bande en fonction de la longueur d'onde ; le passage du signal optique à travers un filtre de polarisation (210), le filtre de polarisation étant efficace pour atténuer le signal en fonction de la longueur d'onde ; et le passage du signal à travers une première lame d'onde variable (212) après le passage du signal à travers l'élément DGD et avant de faire passer le signal à travers le filtre de polarisation, la première lame à retard variable étant efficace pour modifier de manière contrôlée l'état de polarisation absolue de lumière qui le traverse.

9. Procédé selon la revendication 8, dans lequel le filtre de polarisation (210) est agencé de manière à éliminer sensiblement une bande latérale du signal.

10. Procédé selon la revendication 8 ou 9, dans lequel le signal de source optique polarisé est polarisé linéairement.

11. Procédé selon l'une quelconque des revendications 8 à 10, dans lequel l'élément DGD (208) a un axe optique à 45 degrés par rapport à l'état de polarisation du signal de source polarisé.

12. Procédé selon l'une quelconque des revendications 8 à 11, comprenant en outre l'étape consistant à contrôler la température de l'élément DGD (208), dans lequel la modification de la température de l'élément DGD est efficace pour régler l'état de polarisation absolue de lumière qui le traverse.

13. Procédé selon l'une quelconque des revendications 8 à 12, comprenant en outre l'étape consistant à faire passer le signal de la source optique à travers une deuxième lame à retard variable (214) avant de faire passer le signal à travers l'élément DGD, la deuxième lame à retard variable étant adaptée pour ajuster l'angle relatif entre l'état de polarisation du signal de source à polarisation linéaire et un axe optique de l'élément DGD.
